Europäisches Patentamt

European Patent Office

Office européen des brevets

(19)

(11) Numéro de publication: **0 424 352 A2**

## DEMANDE DE BREVET EUROPEEN

(21) Numéro de dépôt: **90870193.1**

(22) Date de dépôt: **18.10.90**

(51) Int. Cl.5: **G09B 1/02**, A63F 9/10

(30) Priorité: **18.10.89 FR 8914012**

(43) Date de publication de la demande:
**24.04.91 Bulletin 91/17**

(84) Etats contractants désignés:
**AT BE CH DE DK ES GB GR IT LI LU NL SE**

(71) Demandeur: **Battaia, Eliane**
**Balosse, route de Montricoux**
**F-82300 Caussade(FR)**

(72) Inventeur: **Sadowski, Jacek**
**1, rue de Normandie**
**F-31830 Plaisance du Touc(FR)**

(74) Mandataire: **Dellicour, Paul**
**Office de Brevets E. Dellicour rue Fabry**
**18/012**
**B-4000 Liège(BE)**

(54) **Jeu éducatif.**

(57) L'invention concerne un jeu éducatif composé d'un tableau 100 divisé en cases T et d'un ensemble de cartes C. A chacune desdites cases T correspond l'une au moins desdites cartes C de telle sorte qu'au cours d'une partie, lesdites cartes C utiles à cette partie recouvrent toutes lesdites cases T, selon un mode de détermination par lequel lesdites cartes C sont en relation intangible avec lesdites cases T d'une part, et sont en relation variable (loi arithmétique) entre elles d'autre part.

Les susdites cases T sont distribuées sur le susdit tableau 100 suivant un système de coordonnées de telle sorte qu'un alignement de dites cases Ta, situé horizontal et en haut dudit tableau 100, suggère l'axe des abscisses a et qu'un autre alignement de dites cases Tb, situé vertical et à la droite dudit tableau 100, suggère l'axe des ordonnées b.

fig. 1

## JEU ÉDUCATIF

La présente invention a trait aux jeux de société et concerne plus particulièrement un jeu éducatif à l'usage des enfants.

La plupart des jeux de société associent à un matériel plus ou moins élaboré et servant de support au jeu, une règle plus ou moins complexe qui détermine l'emploi dudit matériel en vue d'une activité de divertissement.

Un tel amusement, soumis à des règles, constitue en soi un mode d'apprentissage qui a la faveur des enfants. C'est pourquoi, dans le cadre d'un enseignement vivant, les pédagogues visent à développer les facultés intellectuelles de leurs élèves, en captant leur attention par des jeux appropriés. Ces derniers représentent alors un véritable matériel éducatif au service d'une méthode active et pratique d'enseignement.

De nombreux jeux de société ont ainsi vu le jour, qui comportent un aspect ludique certes, mais aussi éducatif. Néanmoins, ces jeux bornent le plus souvent leur ambition au seul apprentissage d'une connaissance particulière. Si l'acquisition de ce premier élément de connaissance est une bonne chose, la rapidité de cette acquisition entraîne la désaffection des enfants pour de tels jeux, par manque d'un intérêt soutenu.

Dans certain cas, l'intérêt ludique est renforcé par une sophistication des règles qui aboutit parfois à rendre le jeu impraticable, notamment pour des enfants de bas age.

Ce que constatant, le demandeur a imaginé un jeu éducatif dont le contenu pédagogique lui confère une valeur éducative certaine, tout en conciliant cette dernière avec l'intérêt ludique d'un jeu à l'usage des enfants.

Pour ce faire, le jeu selon l'invention se compose d'un tableau et d'un ensemble de cartes. Le même tableau est divisé en plusieurs cases identiques d'un format adapté au format desdites cartes. Le même ensemble de cartes est posé, au cours de la partie, sur lesdites cases, jusqu'au recouvrement dudit tableau et jusqu'à l'épuisement desdites cartes utiles à la partie. L'emplacement de chacune des mêmes cartes sur une dite case particulière est déterminé par une relation intangible qui associe chaque dite carte à une dite case au moins, et par une relation variable qui associe à deux dites cartes une troisième dite "de résultat".

Le haut du même tableau présente un premier alignement horizontal de n dites cases, et la droite dudit tableau présente un second alignement vertical de n dites cases aussi. Lesdits alignements sont séparés par une dite case sur laquelle est indiquée l'option de la relation variable qui a été choisie pour la partie engagée.

Ainsi, le même tableau se présente comme un système de coordonnées dans lequel ledit alignement horizontal suggère l'axe des abscisses et ledit alignement vertical suggère l'axe des ordonnées. Lesdits alignements sont séparés par une dite case sur laquelle est indiquée l'option de la relation variable qui a été choisie pour la partie engagée. Lesdits axes comportant le même nombre n de cases, le système de coordonnées est orthonormé ; à une dite case dudit axe des abscisses correspondent toutes les cases dudit axe des ordonnées, chacune par l'intermédiaire d'une dite case de résultat dont la position est déterminée sur ledit tableau par l'intersection de deux droites parallèles aux coordonnées considérées.

Ces dispositions permettent au jeune joueur qui associe une dite carte à une dite case par l'intermédiaire de la relation intangible qui unit cette dite carte et cette dite case, de découvrir une relation seconde qui unit la même dite carte à une ou plusieurs autres cartes elles-mêmes associées à d'autres cases.

Un premier avantage qui résulte de ces dispositions, réside dans la valeur éducative du jeu selon l'invention, lequel ne vise pas le seul apprentissage d'une connaissance particulière mais, par le biais de cette dernière, la découverte de nouvelles connaissances.

Un second avantage qui résulte de ces dispositions, réside dans les différentes options de ladite relation variable, dont le choix pour chaque partie engagée renouvelle l'intérêt ludique du jeu selon l'invention.

D'autres caractéristiques fondamentales et d'autres avantages apparaîtront plus clairement à la lecture de la description qui suit, donnant, à titre non limitatif et illustratif, et en regard des dessins annexés, un mode de réalisation d'un jeu éducatif conforme à l'invention.

Sur ces dessins :

La figure 1 est une vue en perspective de l'ensemble du jeu.

La figure 2 est une vue schématique qui illustre une première option d'une relation variable.

La figure 3 est une vue schématique illustrant une deuxième option de la relation variable.

Sur ces mêmes dessins, le jeu de l'invention propose aux jeunes joueurs, en même temps qu'un apprentissage de l'arithmétique élémentaire, une initiation progressive à la théorie des ensembles.

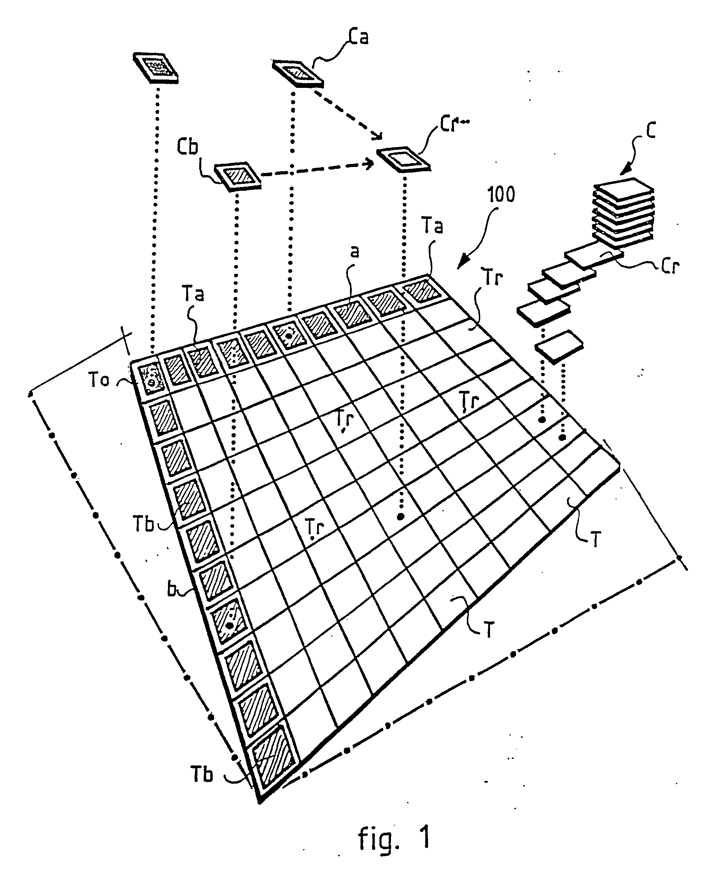

A cet effet, comme illustré sur le dessin de la figure 1, le jeu de l'invention se compose d'un tableau 100 divisé en une centaine de cases T, et d'un ensemble d'une centaine au moins de cartes C, dont quatre vingt dix neuf, utiles à l'achèvement d'une partie, figurent chacune un nombre.

Sur le même tableau 100, en haut de ce dernier, le premier alignement horizontal desdites cases T suggère l'axe des abscisses a, et, à droite du même tableau, le premier alignement vertical de dites cases suggère l'axe des ordonnées b d'un système de coordonnées orthonormé.

Ces deux dits alignements a et b sont adjacents à une case To dite d'option, si bien qu'ils comprennent chacun neuf cases Ta et Tb dites de coordonnées, lesquelles reçoivent chacune neuf dites cartes C1, C2,...C9 composant la suite des nombres de un à neuf.

Afin d'aider les jeunes joueurs à visualiser la distinction apportée à ces dites cases de coordonnées Ta et Tb, ces dernières sont marquées d'une couleur particulière, tandis que ladite case d'option To est marquée d'une autre couleur particulière distincte.

Les mêmes alignements a et b génèrent entre eux un ensemble de neuf fois neuf, soit quatre vingt une cases T dites de résultat Tr. Lesdites cartes Ca et Cb en correspondance avec lesdites cases Ta et Tb de coordonnées étant fixées, le positionnement des quatre vingt une cartes restantes Tr dites de résultat, est déterminé par le nombre qui figure sur chacune de ces dites cartes Cr, lequel résoud l'une des options de la relation variable qui l'associe aux nombres compris entre un et neuf correspondants aux coordonnées des alignements a et b considérées.

Une telle relation variable constitue en l'occurence une relation arithmétique qui associe des nombres entre eux. A titre d'exemples, deux options d'une relation de ce type sont ci-après exposées.

Pour simplification, on se réfère aux ensembles des nombres convenables correspondants aux dites cases de résultat Tr pour les deux options exposées, lesquels nombres sont notés sur les dessins des figures respectives 2 et 3.

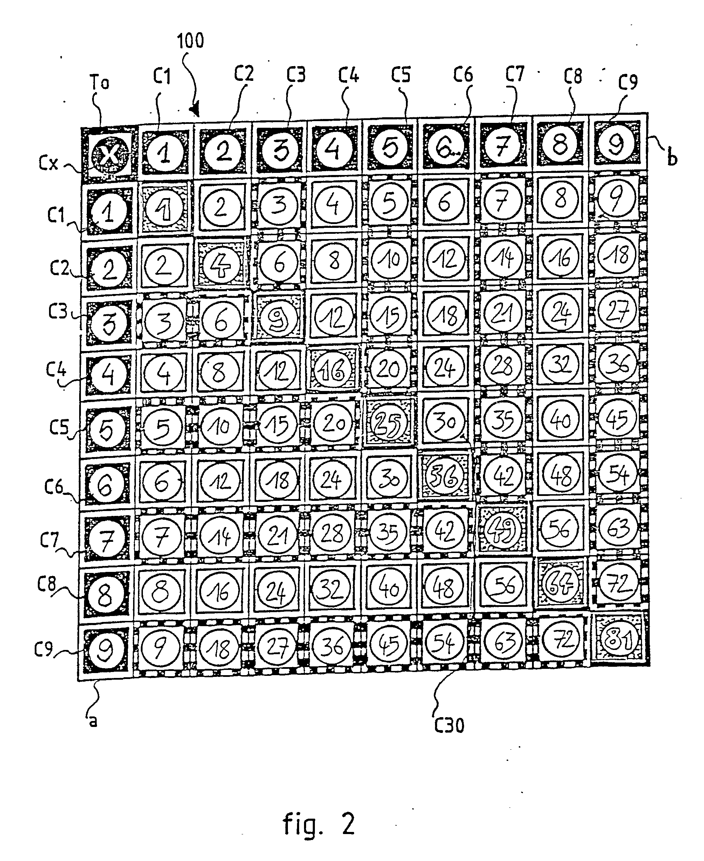

Sur le dessin de la figure 2, l'option de la relation variable qui a été retenue pour la partie engagée est constituée par la carte Cx de la loi de la multiplication. Ce choix est indiqué sur ladite case d'option To par l'apposition de la carte Cx affecté du symbole "X".

Considérant lesdites cases de coordonnées Ta et Tb de la figure 1 qui sont couvertes par les dites cartes C5 et C6 figurant le nombre "cinq" en abscisse et le nombre "six" en ordonnée, la case de résultat Tr qui leur est associée est couverte par ladite carte C30 qui, assimilant le nombre "cinq" à un multiplicateur et le nombre "six" à un multiplicande, figure, comme leur produit, le nombre "trente".

Il convient dès lors que l'ensemble desdites cartes C contienne au moins les cartes de coordonnées Ca, Cb et de résultat Cr et figurant les nombres notés audit dessin de la figure 2, pour que l'ensemble desdites cases de coordonnées Ta, Tb et de résultat Tr dudit tableau 100 soit couvert par lesdites cartes Ca, Cb, Cr, correspondantes au cours de la partie engagée.

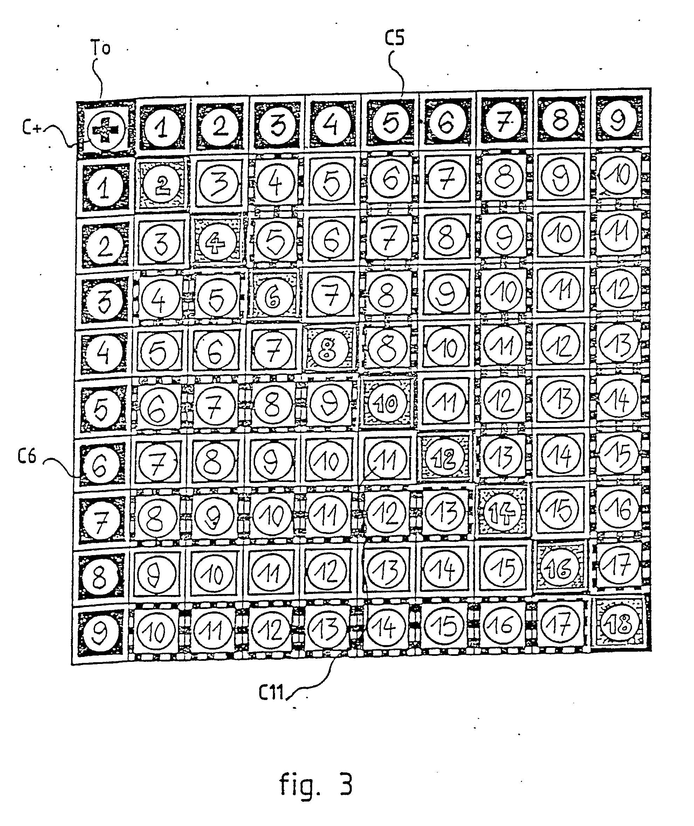

Sur le dessin de la figure 3, l'option de la relation variable qui a été retenue pour une nouvelle partie est constituée par la carte C + de la loi de l'addition. Ce choix est indiqué sur ladite case d'option To par l'apposition de la carte C + affecté du symbole " + ".

Considérant les mêmes coordonnées C5 et C6 que précédemment, la case de résultat Tr correspondante est couverte par ladite carte $C_{11}$ qui, assimilant les nombres "cinq" et "six" aux deux termes d'une somme, figure le nombre 'onze'.

Il convient dès lors que l'ensemble desdites cartes C contienne au moins les cartes Ca, Cb et Cr figurant les nombres notés audit dessin de la figure 3, pour que l'ensemble desdites cases Ta, Tb, Tr dudit tableau 100 soit couvert par lesdites cartes Ca, Cb, Cr correspondantes, au cours de la nouvelle partie engagée.

Ainsi, l'ensemble des quatre vingt une dites cartes C figurant les nombres convenables pour la loi de la multiplication, ne correspond pas à l'ensemble des quatre vingt une dites cartes C figurant les nombres convenables pour la loi de l'addition. Néanmoins, l'intersection de ces deux ensembles de cartes est large, si bien qu'un ensemble adéquat de cent vint huit dites cartes C figurant des nombres, permet de couvrir alternativement selon la loi de la multiplication "x" ou selon la loi de l'addition " + ", les quatre vingt une dites cases de résultat Cr dudit tableau 100. Ce dernier ensemble de 128 cartes est aisément déduit des ensembles de nombres notés aux dessins des figures 2 et 3.

On peut considérer que la suite des nombres de un à neuf, telle qu'utilisée dans le mode de réalisation de l'invention, soit en relation arithmétique avec elle-même, engendre des résultats groupés dans des ensembles dont les propriétés sont remarquables.

Dès lors, le sytème de coordonnées a,b du jeu de l'invention s'apparente à un "repère cartésien" dont l'intérêt est de permettre de visualiser certaines desdites propriétés relatives aux ensembles.

Parmi ces dernières, la propriété de symétrie est mise en évidence, pour les deux lois de la multiplication et de l'addition, sur les dessins des figures 2 et 3. En raison de cette propriété mathématique de l'ensemble des nombres de résultat de ces deux lois, des nombres identiques figurant sur ledit tableau 100 sont répartis symétriquement de part et d'autre d'une diagonale du même tableau 100.

Pour permettre aux jeunes joueurs de visualiser cette propriété de la symétrie, ladite diagonale est colorée par une couleur particulière pour la distinguer.

D'autres propriétés mathématiques remarquables de la loi de la multiplication "x", de la loi de l'addition "+", ou de toute autre loi de la relation arithmétique variable, déterminent des groupes particuliers desdites cases T qui peuvent être aussi distingués chacun par une couleur particulière, de manière à visualiser ces propriétés sur ledit tableau.

On comprend que l'invention, qui vient d'être ci-dessus décrite et représentée, l'a été en vue d'une divulgation plutôt que d'une limitation. Bien entendu, divers aménagements, modifications et améliorations pourront être apportés à l'exemple ci-dessus, sans pour autant sortir du cadre de l'invention pris dans ses aspects et dans son esprit les plus larges.

Afin de permettre une meilleure compréhension des dessins, une liste des références avec leurs légendes est ci-après énumérée.

100     Tableau
T     Cases du tableau 100
Ta     Cases des abscisses
Tb     Cases des ordonnées
Tr     Cases de résulats
To     Case d'option
T1,T2,etc     Case de positionnement d'un nombre
C     Carte
Ca     Carte des abscisses
Cb     Carte des ordonnées
Cr     Carte de résultat
$C_1,C_2$,etc     Carte affectée du nombre en indice
Cx     Carte symbolisant la loi de multiplication
C+     Carte symbolisant la loi d'addition

## Revendications

1. Jeu éducatif composé d'un tableau (100) divisé en cases (T) et d'un ensemble de cartes (C), CARACTERISE PAR LE FAIT QUE les susdites cases (T) sont distribuées sur le susdit tableau (100) suivant un système de coordonnées de telle sorte qu'un alignement des dites cases (Ta), situé horizontal dans ledit tableau (100), suggère l'axe des abscisses (a) et qu'un autre alignement des dites cases (Tb), situé vertical dans ledit tableau (100), suggère l'axe des ordonnées (b), et PAR LE FAIT QUE sur chacune des susdites cartes (C) figure un nombre, différent pour la plupart d'entre elles, de telle sorte que, lesdites cartes (Ca et Cb) apposées sur des cases du tableau (100) prédéterminent les susdites cases de coordonnées (Ta et Tb), et les autres dites cartes (Cr) apposées sur les autres cases prédéterminent les susdites cases de résultat (Tr), pour leur positionnement sur ledit tableau (100), par le nombre qu'elles représentent chacune, lequel nombre résoud une relation arithmétique des nombres correspondants (a et b) des susdites cartes (Ca et Cb) apposées sur lesdites cases de coordonnées considérées (Ta et Tb).

2. Jeu éducatif selon la revendication 1, CARACTERISE PAR LE FAIT QUE le susdit système de coordonnées est orthonormé de telle sorte qu'à chacune des susdites cases (Ta) du susdit axe des abscisses (a), correspondent toutes lesdites cases (Tb) du susdit axe des ordonnées (b) par l'intermédiaire des cases de résultat (Tr) dont la position est déterminée sur le susdit tableau (100) par l'intersection de deux droites parallèles aux coordonnées considérées.

3. Jeu éducatif selon les revendications 1 et 2, CARACTERISE PAR LE FAIT QUE le susdit système de coordonnées engendre plusieurs alignements horizontaux et plusieurs alignements verticaux de susdites cases (T), lesquels alignements sont distingués en alternance, pour tout ou partie de leurs longueurs et juqu'aux susdites cases de résultat (Tr) figurant leur intersection de telle sorte que lesdites cases de résultat (Tr) sont visuellement distinguées.

4. Jeu éducatif selon les revendications 1, 2 et 3 prises ensembles, CARACTERISE PAR LE FAIT QUE le susdit alignement desdites cases (Ta) suggérant l'axe horizontal des abscisses (a) est situé en haut dudit tableau (100) et le susdit alignement desdites cases (Tb) suggérant l'axe vertical des ordonnées (b) est situé à gauche du tableau (100).

5. Jeu éducatif selon les revendications 1, 2, 3 et 4 prises ensembles, CARACTERISE PAR LE FAIT QUE les susdites cartes (Ca et Cb) correspondantes aux susdites cases de coordonnées (Ta et Tb) figurent la suite des nombres simples de un à neuf de telle sorte que le susdit tableau (100) est divisé selon une centaine de dites cases (T), parmi lesquelles :
- une case dite d'option (To) située à l'intersection de l'axe des abscisses (a) et de l'axe des ordonnées (b), permettant de choisir la loi arithmétique liant les nombres des cases (Ta et Tb) des coordonnées,
- dix huit dites cases de coordonnées (Ta et Tb),
- quatre vingt une dites cases de résultat (Tr).

6. Jeu éducatif selon les revendications 1, 2, 3, 4 et 5 prises ensembles CARACTERISE PAR LE FAIT QUE sur les susdites quatre vingt une cartes de résultat (Tr) d'une part, figurent au moins :
- une fois les nombres un, vingt cinq, quarante neuf, soixante quatre et quatre vingt un,
- deux fois les nombres deux, trois, cinq, sept, dix, quatorze, quinze, vingt, vingt et un, vingt sept, vingt huit, trente, trente deux, trente cinq, quarante, quarante deux, quarante cinq, quarante huit, cinquante quatre, cinquante six, soixante trois, et soixante douze,

- trois fois les nombres quatre, neuf, seize, et trente six,

- quatre fois les nombres six, huit, douze, dix-huit, et vingt quatre,

et que sur la carte d'option (To) dautre part, figure le symbole (Cx), de telle sorte que la relation mathématique choisie est la loi de la multiplication.

7. Jeu éducatif selon les revendications 1, 2, 3, 4 et 6 prises ensembles, **CARACTERISE PAR LE FAIT QUE** sur les susdites quatre vingt une cartes de résultat (Cr) d'une part, figurent au moins :

- une fois les nombres deux et dix huit, deux fois les nombres trois et dix sept, trois fois les nombres quatre et seize, quatre fois les nombres cinq et quinze, cinq fois les nombres six et quatorze, six fois les nombres sept et treize, sept fois les nombres huit et douze, huit fois les nombres neuf et onze, et neuf fois le nombre dix, et que sur la carte d'option (To) d'autre part, figure le symbole +, de telle sorte que la relation mathématique choisie est la loi de l'addition.

8. Jeu éducatif selon les revendications 1, 2, 3, 4, 6 et 7 prises ensembles, **CARACTERISE PAR LE FAIT QUE** l'ensemble des sudites cartes de résultat (Tr) comprend cent vingt huit dites cartes sur lesquelles figurent au moins :

- les nombres des quatre vingt une cartes correspondant à la loi de la multiplication,

- une fois le nombre six, deux fois les nombres cinq, quinze, et dix sept, trois fois les nombres huit, douze et quatorze ;

- quatre fois le nombre sept, cinq fois le nombre neuf, six fois le nombre treize, et huit fois les nombres dix et onze, de telle sorte que la relation mathématique choisie peut être soit la loi de la multiplication, soit la loi de l'addition.

9. Jeu éducatif selon les revendications 1, 2, 3, 4, 6 et/ou 7 ou 8 prises ensembles, **CARACTERISE PAR LE FAIT QUE** un ou plusieurs groupes particuliers, parmi l'ensemble des susdites cases de résultat (Tr), sont distingués par différents fonds colorés de telle sorte que les propriétés mathématiques remarquables de la loi de la multiplication et/ou de la loi de l'addition et/ou d'une autre relation arithmétique, qui déterminent lesdits groupes, sont visuellement exprimées sur le susdit tableau.

fig. 1

fig. 2

fig. 3